# EUROPÄISCHE PATENTSCHRIFT

(11) **EP 3 444 098 B1**
(45) Veröffentlichungstag und Bekanntmachung des Hinweises auf die Patenterteilung: **22.04.2020**
(21) Anmeldenummer: 17186163.6
(22) Anmeldetag: 14.08.2017
(51) Int. Cl.: B29C 51/46, B29C 51/42

(54) **VERFAHREN UND VORRICHTUNG ZUM KÜHLEN EINES AUS ZWEI WERKZEUGHÄLFTEN BESTEHENDEN WERKZEUGS EINER THERMOFORMMASCHINE**
METHOD AND APPARATUS FOR COOLING A TOOL OF A THERMOFORMING MACHINE COMPRISING TWO HALVES
PROCÉDÉ ET DISPOSITIF DE REFROIDISSEMENT D'UN OUTIL D'UNE MACHINE DE THERMOFORMAGE COMPRENANT DEUX MOITIÉS D'OUTIL

(43) Veröffentlichungstag der Anmeldung: 20.02.2019
(73) Patentinhaber: Gabler Thermoform GmbH & Co. KG, 23568 Lübeck (DE)
(72) Erfinder: Rowedder, Axel, 23623 Ahrensbök (DE)
(74) Vertreter: Grosse, Wolf-Dietrich Rüdiger

(56) Entgegenhaltungen:
- EP-B1- 1 250 992
- DE-C1- 3 135 206

## Beschreibung

Die Erfindung betrifft ein Verfahren zum Kühlen eines aus formenden und stanzenden, aus zwei Werkzeughälften bestehenden, ein Oberwerkzeug und ein Unterwerkzeug aufweisenden Werkzeugs einer Thermoformmaschine zum Herstellen von Produkten aus einer erwärmt in das Werkzeug einlaufenden Kunststofffolie, wobei Oberwerkzeug und Unterwerkzeug von einem zentralen Kühler, der mit seinem Vorlauf und seinem Rücklauf an Kühlkreisläufe der beiden Werkzeughälften angeschlossen ist, mit einem Kühlmittel versorgt wird, wobei in den Kühlkreisläufen jeweils im Vorlauf und im Rücklauf ein Temperatursensor vorgesehen ist, die mit einer Steuerung verbunden sind, die bei einer von den Sensoren erfassten Temperaturdifferenz ein Mittel zur Regelung des Kühlmittelstroms ansteuert. Desweiteren betrifft die Erfindung eine Vorrichtung zum Durchführen des Verfahrens.

Auf solchen Thermoformmaschinen mit kombinierten Form- und Stanzwerkzeugen werden aus einer durch eine Heizung auf exemplarisch 170 °C erwärmten Kunststofffolienbahn Massenprodukte hergestellt, wie Technik - oder Lebensmittelverpackungen, z. B. Behälter, Schalen oder dergleichen. Die die Forderungen nach immer höheren Ausstoßleistungen erfüllenden Hochleistungs-Thermoformmaschinen arbeiten mit sehr großen Werkzeugen, die entsprechend große Formflächen besitzen, auf welchen die Formnester für die herzustellenden Produkte mehrreihig vorhanden sind. Es können exemplarisch 140 Produkte in einem Werkzeug vorgesehen werden, so dass mit einem Maschinentakt 140 Produkte ausgeworfen werden können, dies exemplarisch bei 32 Takten pro Minute 24 Stunden am Tag und 7 Tage in der Woche.

Die erwärmte Folienbahn wird während des Formprozesses auf eine prozesssichere Entformtemperatur von beispielsweise 50 °C abgekühlt. Durch den Aufbau der zweiteiligen Werkzeuge übernimmt das Unterwerkzeug die überwiegende Formgebung, während die Randklemmung durch das Oberwerkzeug erfolgt. Die sich daraus ergebenden Kontaktflächen zum entstehenden Produkt machen stark abweichende, abzuführende Wärmemengen von Unterwerkzeug und Oberwerkzeug erforderlich. Zum Ausstanzen der Produkte nach dem Formprozess bzw. dem Ausformen besitzen die Werkzeuge je Formnest eine Schneidenpaarung aus einem Stempel im Unterwerkzeug und einer Matrize im Oberwerkzeug. Um den Qualitätsansprüchen hinsichtlich Schnittkante am hergestellten Produkt gerecht werden zu können, muss der sich ergebende Schneidspalt von Stempel und Matrize sehr gering gehalten werden, exemplarisch mit 0,005 mm ausgelegt.

Die vorgenannten exemplarischen Daten machen deutlich, welche erheblichen Anforderungen an die Kühlleistung beim Form- und Stanzprozess gestellt werden. Eine besondere Problematik bereitet dabei die gleichmäßige Wärmeabfuhr im Unterwerkzeug und Oberwerkzeug, um die in einem klimatisierten Raum gefertigten Werkzeugteile auch während der Produktion auf dieser Temperatur bzw. Fertigungstemperatur zu behalten. Hierbei ist weniger die Absolut-Temperatur der Werkzeughälften von Bedeutung, vielmehr sind deren Relativ-Temperaturen zueinander entscheidend. Als zusätzliches Problem sind die unterschiedlichen Betriebsarten zu beachten, nämlich einerseits die laufende Produktion und andererseits das Anfahren nach einem Maschinenstillstand, weil unterschiedliche Randbedingungen berücksichtigt werden müssen.

Bei jeder Temperaturabweichung zwischen Oberwerkzeug und Unterwerkzeug beeinflussen die dann unterschiedlichen Wärmedehnungen in nachteiliger Weise die Schneidenpaarungen des Werkzeugs. Es macht daher eine exakte Temperaturführung der Werkzeughälften zueinander erforderlich, um die Stichmasse der jeweiligen Schneidenpaarungen in den zulässigen Toleranzen zu halten, was durch Werkzeuge mit großen Formdiagonalen, welche sich aus Werkzeuglänge und Werkzeugbreite ergeben, noch weiter erschwert wird. Bei unzulässigen Abweichungen verschleißen das Werkzeug und die Maschine überproportional. Nicht nur, aber gerade bei großen und kostenintensiven Anlagen wird eine hohe Verfügbarkeit angestrebt, weil mit der Anlagengröße die Stillstandkosten steigen und ggf. Lieferverpflichtungen nicht erfüllt werden können, da bei den Produzenten eine große Maschine oftmals viele kleine Maschinen ersetzt.

Die gattungsbildende EP 1 250 992 B1 sieht zur Vermeidung der Nachteile der dort zum Stand der Technik beschriebenen verschiedenen Lösungen vor, an den beiden Werkzeughälften jeweils im Vorlauf und im Rücklauf einen Temperatursensor anzuordnen und bei erfassten Temperaturabweichungen den Volumenstrom in den Kühlkreisläufen in Abhängigkeit der Differenz zwischen Vorlauf- und Rücklauftemperatur zu beeinflussen. Dazu wird das von einem zentralen Kühler zugeführte Kühlmittel je einem Mischventil für Ober- und Unterwerkzeug zugeführt und von diesem aus durch je eine Umwälzpumpe den beiden Werkzeughälften über einen Kühlkreislauf in der Weise zugeführt, dass die Vorlauftemperatur oder die Rücklauftemperatur der Kühlkreisläufe auf einen vorgegebenen Wert geregelt wird und bei Überschreitung dieses Wertes eine Zumischung von Kühlmittel aus dem Kühler über das Mischventil erfolgt. Der Kühler speist das Kühlmittel mit einer Temperatur von ca. 4 °C bis 12 °C bei einem Druck von ca. 4 bis 6 bar in die Kühlkreisläufe ein. Jede Werkzeughälfte wird somit autark auf den Sollwert geregelt, wobei die Temperaturen an den Eingangs- oder Ausgangslinien eindimensional gleichgehalten werden können bzw. im vorliegenden Fall sollen die Temperatursollwerte bewusst unterschiedlich einstellbar sein, um Fertigungstoleranzen kompensieren zu können, was jedoch wegen der in beliebige Richtungen streuenden Toleranzen an Machbarkeitsgrenzen stößt.

Bei der bekannten Werkzeugkühlung wird auch für den beschriebenen Verfahrensablauf nach einem Stillstand der Thermoformmaschine der Kühler mit einer Kühlwasser-Vorlauftemperatur von 4 bis 12 °C verwendet und dann aber von der Steuerung für die Mischventile der Mischeinheit als Vorlauftemperatur ein im Bereich der Raumtemperatur liegender Wert von ca. 16 bis 20 °C vorgegeben. Wenn die Temperatur des Kühlmittels in einem der Kühlkreisläufe über die vorgegebene Vorlauftemperatur ansteigt, wird durch Beeinflussung des entsprechenden Mischventils nur die Steuerung einer erforderlichen Menge Kühlwasser aus dem Vorlauf beigemischt. Eine gleiche Menge Kühlmittel fließt über den Rücklauf zum Kühlwasser. Der Kühler bedarf somit einer großen Kühlleistung, denn bedingt durch das von dem Werkzeug auf ca. 22 °C erwärmte Kühlmittel wird dem Kühler über das Mischventil somit 22 °C warmes Kühlmittel zurückgeführt. Die Differenztemperatur für den Kühler liegt demnach im Bereich von ca. 10 bis 18 °C. Diese Temperaturdifferenz geht linear in die Berechnung der erforderlichen Kühlleistung ein. Abgesehen davon, dass die Kühlung sehr komplex ist, weil die Steuerung aus beiden Regelkreisen jeweils zwei Ist-Werte verarbeiten und zum Regeln jeweils zwei Stellglieder genutzt werden müssen, läßt sich durch Interferenz der Temperaturkurven von Oberwerkzeug und Unterwerkzeug ein entsprechend großes Δt nicht vermeiden, so dass die beiden Werkzeughälften mit nachteiliger Auswirkung auf den Schneidspalt auseinander wachsen. Ausserdem ist energetisch unvorteilhaft, dass ein leistungsstarker Kühler und mehrere Pumpen benötigt werden.

Der Erfindung liegt die Aufgabe zugrunde, ein Verfahren und eine Vorrichtung der gattungsgemäßen Art ohne die genannten Nachteile zu schaffen, die insbesondere auch bei großen Werkzeugen von Hochleistungs-Thermoformmaschinen mit deutlich geringerem Aufwand die Einhaltung eines kleinstmöglichen Schneidspalts zwischen Stempel und Matrizen der beiden Werkzeughälften ermöglichen.

Diese Aufgabe wird mit einem Verfahren dadurch gelöst, dass die Temperaturdifferenz einer Werkzeughälfte abhängig von der Temperaturdifferenz der anderen Werkzeughälfte bis zum Vorliegen der selben Temperaturdifferenzen in beiden Werkzeughälften geregelt wird, wobei als Sollwert für die Differenzregelung das in Folienlaufrichtung von den Temperatursensoren über die gesamte Werkzeug-Formfläche erfasste Δt zugrunde gelegt wird. Die Erfindung sieht somit vor, dass die Temperatur jeder Werkzeughälfte nicht mehr durch eine nur eindimensionale Temperaturerfassung mittels der Sensoren an der Einlauf- oder Auslauflinie von Vor- oder Rücklauf für sich bis zum Sollwert geregelt wird. Vielmehr werden die Temperaturen der Formflächen der beiden Werkzeughälften zweidimensional, über die gesamte Formfläche (Länge / Breite) auf ein gleiches Niveau gebracht, in dem das für die eine Werkzeughälfte erfasste Δt auf die Formfläche der anderen Werkzeughälfte übertragen bzw. dort abgebildet wird, so dass sich für das Unterwerkzeug und das Oberwerkzeug als Δt ein Sollwert von 0 erreichen lässt. Da Unterwerkzeug und Oberwerkzeug somit ein stets gleiches Wachstum haben, liegt ein allenfalls äußerst geringer Schneidenspalt bzw. Schneidenversatz zwischen den Stempeln und den Matrizen der Werkzeughälften vor.

Ein bevorzugter Vorschlag der Erfindung besteht darin, dass das Unterwerkzeug von dem Kühler mit einem ungeregelten, ungedrosselten, eine hohe Vorlauftemperatur aufweisenden Kühlmittelstrom versorgt wird, wobei das von den Temperatursensoren des Unterwerkzeugs erfasste Δt in der Weise in Übereinstimmung mit dem Δt des Oberwerkzeugs gebracht wird, dass die in der Steuerung integrierte Regelung nur den dem Oberwerkzeug zugeführten Kühlmittelstrom verändert, bis die Temperatursensoren des Oberwerkzeugs das gleiche Δt wie im Unterwerkzeug vorliegend erfassen. Der erfindungsgemäßen Temperaturführung über das Unterwerkzeug liegt die Überlegung und das Wissen darüber zugrunde, dass der Kühlbedarf im Unterwerkzeug um ca. Faktor 3 größer ist als der des Oberwerkzeugs. Das Unterwerkzeug ist damit das hinsichtlich des Kühlbedarfs begrenzende, taktzahlbestimmende Element, von dessen Regelung daher abgesehen wird. Dies insbesondere deshalb nicht, weil die Vorlauftemperatur des Kühlers, über dessen Vorlauf der Förderstrom abgehend von einer Verteilerleiste ungedrosselt durch das Unterwerkzeug geleitet wird, so hoch gewählt wird, dass einerseits die sich einstellende Werkzeugtemperatur ca. der Fertigungstemperatur des Werkzeugs im klimatisierten Raum entspricht und andererseits ein Mischen des Wasser-Volumenstroms bzw. Förderstroms mit kaltem Kühlwasser nicht erforderlich macht.

Durch die hohe Vorlauftemperatur des Kühlers, der dem Unterwerkzeug das Kühlmittel mit einer konstant hohen Vorlauftemperatur von vorzugsweise 15 bis 22 °C zuführt, besteht auch im Stillstand nicht das Problem des Auskühlens. Je nach Werkzeug-Aufbau, Taktzahl, Foliendicke, aber auch Wartungszustand, Verkalkungsgrad, Verschmutzungsgrad und Volumenstrom, erwärmt sich das Wasser beim Durchströmen des Unterwerkzeugs. Die Erwärmung an einem neuen Werkzeug beträgt erfahrungsgemäß 1 bis 1,5 °C, kann aber durch die vorgenannten Randbedingungen auch auf 3 °C und mehr anwachsen. Das Wassertemperaturwachstum verhält sich proportional zum Werkzeug-Temperaturwachstum, wobei das Wassertemperaturwachstum generell größer ist. Das Unterwerkzeug weist - beeinflusst von den obigen Randbedingungen - ein Temperaturprofil in Folienlaufrichtung auf, welches durch die Temperatursensoren an den Ein- und Auslauflinien des in die Werkzeughälfte ein- bzw. ausströmenden Wassers erfasst und als Δt an die Steuerung übertragen wird. Die Steuerung initiiert gemäß Δt des Unterwerkzeugs eine Veränderung des Förderstroms zum Oberwerkzeug in der Weise, dass sich für das Oberwerkzeug das gleiche Temperaturprofil, erfasst wiederum über die Temperatursensoren an den Ein- und Auslauflinien, ergibt, wobei die in der Steuerung integrierte Regelung die Temperaturdifferenz des Oberwerkzeugs erfasst und steuert so dass die Temperaturdifferenzen der Werkzeughälften gleich sind, nämlich: Δt (Auslauf minus Einlauf) Unterwerkzeug minus Δt (Auslauf minus Einlauf) Oberwerkzeug gleich Δt (Unterwerkzeug minus Oberwerkzeug) gleich 0 (Soll). Die zweidimensionale Flächenregelung minimiert somit entsprechend den Schneidenversatz / Schneidspalt zwischen den Werkzeughälften.

Eine Vorrichtung zum Durchführen des Verfahrens sieht vor, dass der Kühler mit einem Vorlauftemperaturregler und einer Förderpumpe ausgebildet ist, die dem Unterwerkzeug einen eine hohe Vorlauftemperatur, vorzugsweise 15 bis 22 °C aufweisenden, ungeregelten und ungedrosselten Kühlmittelstrom zuführt, dass von den beiden an den Kühler angeschlossenen Kühlkreisläufen allein im Kühlkreislauf des Oberwerkzeugs ein mit der Steuerung verbundenes Mittel, vorzugsweise ein elektrisch stufenlos verstellbares Motor-Drosselventil, zum geregelten Verändern des dem Oberwerkzeug zugeführten Kühlmittelstroms vorgesehen ist, und dass ein Temperatursensor in Folienlaufrichtung gesehen jeweils an der Einsowie der Auslauflinie von Ober- und Unterwerkzeug angeordnet ist. Die Angleichung der Temperaturprofile gemäß dem Δt des Unterwerkzeugs erfolgt somit durch eine Verstellung des Drosselventils im Kühlkreislauf des Oberwerkzeugs. Da die Temperaturdifferenz zwischen Vor- und Rücklauf maximal 3°C beträgt, kann der Kühler energetisch sehr kompakt sein.

Eine vorteilhafte Ausgestaltung der Erfindung sieht einen an jedem Werkzeughälftenblock angeordneten, mit der Steuerung verbundenen Temperatursensor vor. Es läßt sich damit die gesamte Kühlkreis-Peripherie und basierend auf den Messwerten eine mögliche, z. B. durch eine unzureichende Vorlauftemperatur oder einen unzureichenden Volumenstrom bewirkte Temperatur-Drift der Werkzeugblöcke überwachen und bei einer wesentlichen Überschreitung der vorgegebenen Grenzwerte ein Alarm auslösen oder die Thermoformmaschine abschalten.

Weitere Merkmale und Einzelheiten der Erfindung ergeben sich aus den Ansprüchen und der nachfolgenden Beschreibung eines in den Zeichnungen dargestellten Ausführungsbeispiels der Erfindung. Es zeigen:
- Fig. 1: von einer Thermoformmaschine schematisch die Formstation mit noch geöffnetem, aus zwei Hälften - Ober- und Unterwerkzeug - bestehendem Werkzeug;
- Fig. 2: in der Darstellung gemäß Fig. 1 die Formstation der Thermoformmaschine bei geschlossenem Werkzeug;
- Fig. 3: einen Detailausschnitt des Werkzeugs vor dem Zusammenfahren der Werkzeughälften;
- Fig. 4: den Detailausschnitt des Werkzeugs nach Fig. 3 nach dem Ausstanzen;
- Fig. 5: eine schematische Draufsicht auf das Unterwerkzeug als Schnitt-entlang der Linie V-V von Fig. 2 um 90° gedreht;
- Fig. 6: eine schematische Darstellung des Formflächenwachstums von Unter- und Oberwerkzeug bei einer zweidimensionalen Formflächenregelung der Werkzeugtemperatur abhängig von dem in Folienlaufrichtung über die gesamte Formfläche des Unterwerkzeugs erfassten Δt, das auf das Oberwerkzeug übertragen wird; und
- Fig. 7: eine Schemadarstellung der erfindungsgemäßen Kühlmittelführung des zwei-teiligen Werkzeugs.

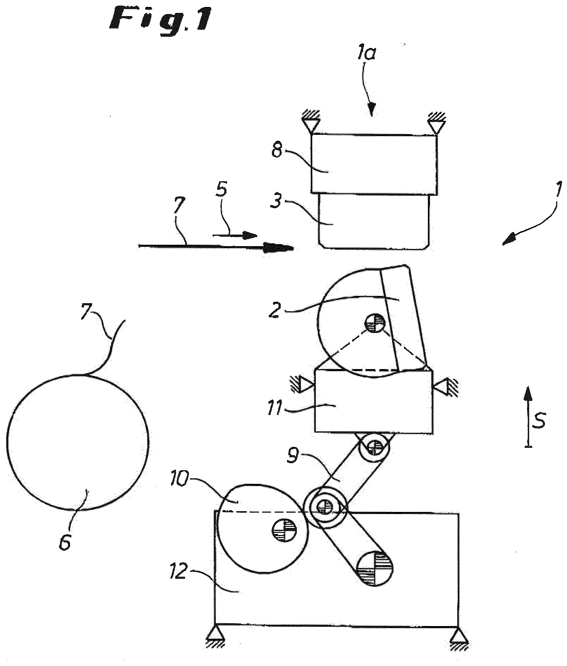

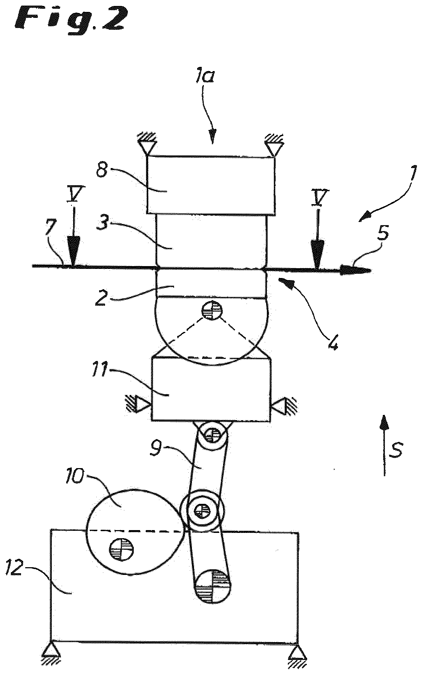

Von einer ebenso hinlänglich wie der Thermoprozess bekannten Thermoformmaschine 1 ist in den Figuren 1 und 2 deren Formstation 1a dargestellt. In dieser ist ein zwei-teiliges, ein Unterwerkzeug 2 und ein Oberwerkzeug 3 aufweisendes Form- und Stanzwerkzeug bzw. Werkzeug 4 angeordnet, in das zum Ausformen von Artikeln aus Kunststoff in Folienlaufrichtung 5 eine zuvor erwärmte, wie in Fig. 1 angedeutet z. B. von einer Rolle 6 abgewickelte Kunststofffolienbahn 7 sukzessive einläuft. Das Oberwerkzeug 3 ist an einem ortsfesten Oberjoch 8 befestigt, während das Unterwerkzeug 2 als bewegliche Werkzeughälfte ausgeführt ist und sich relativ zum Oberwerkzeug 3 bewegt. Dabei kann eine kombinierte translatorische und Schwenkbewegung zum Einsatz kommen, um nach dem Ausformen von Artikeln diese einfacher aus der Maschine abzuführen und zu stapeln. Die Bewegung des Unterwerkzeugs 2 wird von einem Kniehebel 9 bewerkstelligt, an dem eine Kurvenscheibe 10 ansitzt. Durch diesen Bewegungsmechanismus wird ein Untertisch 11, auf dem das Unterwerkzeug 2 angebracht ist, relativ zu einem Unterjoch 12 bewegt. Bei der Bewegung der Kurvenscheibe 10 wird demgemäß das Werkzeug 4 bzw. dessen Unter- und Oberwerkzeug 2, 3 geöffnet bzw. geschlossen; die Werkzeugschließrichtung ist mit S angegeben.

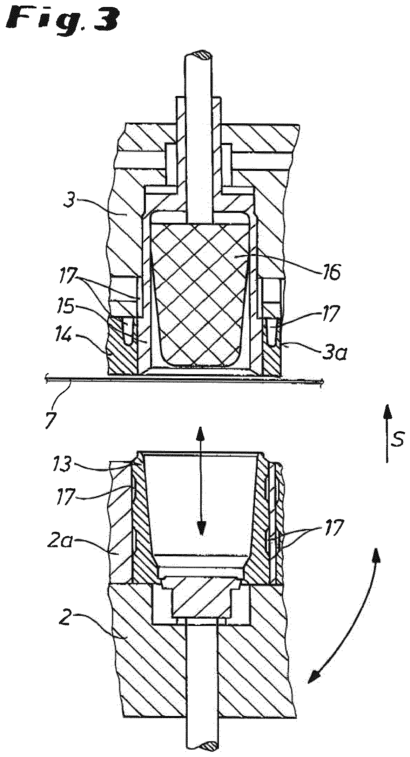

In Fig. 3 ist der Zustand zu sehen, bei dem die Folienbahn 4 zwischen Unter- und Oberwerkzeug 2, 3 geschoben ist, diese beiden Werkzeughälften aber noch nicht geschlossen wurden. Das Werkzeug 4 weist in seinem Unterwerkzeug 2 einen in seinem Werkzeugblock 2a angeordneten Schnittstempel 13 auf, dem eine in dem auch der Randklemmung der einlaufenden Folienbahn 7 dienenden Werkzeugblock 3a des Oberwerkzeugs 3 ausgebildete Matrize 14 zugeordnet ist. Im Oberwerkzeug 3 sind für die Folienbahn 7 weiterhin ein Niederhalter 15 und ein Vorstrecker 16 angeordnet.

Sowohl im Unterwerkzeug 2 bzw. dessen Werkzeugblock 2a als auch im Oberwerkzeug 3 bzw. dessen Werkzeugblock 3a sind von einer zentralen Kühlmittelquelle versorgte Kühlmittelkanäle 17 ausgebildet.

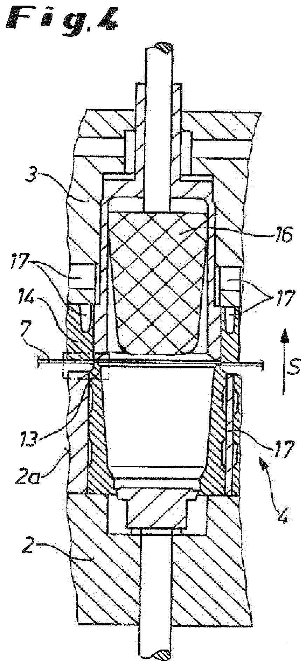

In Figur 4 ist zu sehen, dass das Werkzeug 4 nun geschlossen wurde, allerdings nur bis zu einer ersten Relativposition von Unter - und Oberwerkzeug 2, 3 und zwar in der Weise, dass die Folienbahn 7 ausgestanzt, aber noch nicht durchgestanzt bzw. ausgestanzt worden ist. Dies ist erforderlich, um das Produkt während des Form- und Kühlvorgangs zu fixieren und die Formluft abzudichten. Erst wenn das Unterwerkzeug 2 noch weiter in Schließrichtung S auf das Oberwerkzeug 3 zugefahren wird, kommt es zum völligen Ausstanzen des Artikels bzw. Produkts aus der Folienbahn 7.

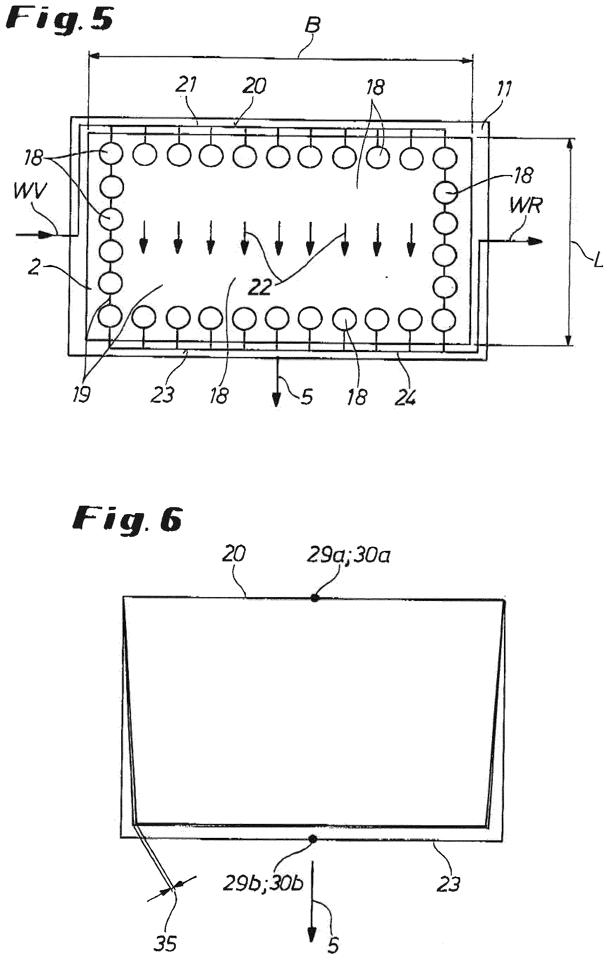

Die das auf dem Untertisch 11 angeordnete Unterwerkzeug 2 schematisch darstellende Figur 5 läßt erkennen, dass es sich um ein großes Werkzeug mit über die Formflächenbreite B und die Formflächenlänge L mehrreihig verteilten, die Artikelkontur vorgebenden Formnestern 18 handelt. Jedes dieser Formnester 18 ist mit einem zuvor beschriebenen Schnittstempel 13 versehen, denen im Oberwerkzeug 3 in entsprechender Anzahl Matrizen 14, Niederhalter 15 und Vorstrecker 16 zugeordnet sind. Die in Folienlaufrichtung 5 gesehen in jeder Formnestreihe aufeinander folgenden Formnester 18 werden von Formnestspalten 19 überbrückt, über die von einem Wasservorlauf WV zuströmendes Kühlmittel von einer an der Einlauflinie 20 vorgesehenen Verteilerleiste 21 an die sich in der Formflächenbreite B in Breitenrichtung erstreckenden vordersten Formnester 18 einströmt und sich über die durch Durchströmungspfeile 22 angedeutete Spaltenströmung bis zu den hintersten sich in Formflächenbreite B erstreckenden bzw. aneinander gereihten Formnestern 18 fortpflanzt. Dort strömt das Kühlmittel bzw. Wasser über eine an der Auslauflinie 23 angeordnete, mit allen hintersten Formnestern 18 verbundene Rücklaufleiste 24 als gesammelter Volumenstrom über einen Wasserrücklauf WR zurück zur Kühlmittelquelle. In gleicher Weise erfolgt die Kühlmittelversorgung des Oberwerkzeugs, nämlich ausgehend von der Einlauflinie mit der Kühlmittelverteilung über die Kühlmittelkanäle 17 die gesamte Formfläche in Folienlaufrichtung bis zur Auslauflinie im Wasserrücklauf durchströmend.

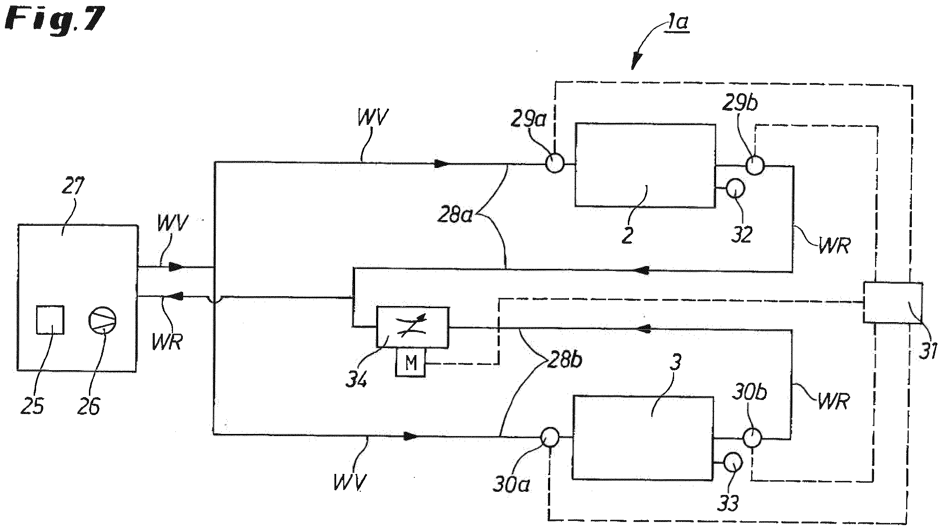

Zum Kühlen von Unter- und Oberwerkzeug 2, 3 in der Formstation 1a der Thermoformmaschine wird Wasser als Kühlmittel von einem mit einem Vorlauftemperaturregler 25 und einer Förderpumpe 26 ausgerüsteten Kühler 27 über den Wasservorlauf WV in einen Kühlkreislauf 28a für das Unterwerkzeug 2 und einen Kühlkreislauf 28b für das Oberwerkzeug 3 eingespeist, wobei die Kühlkreisläufe gleichzeitig an den zum Kühler 27 zurückführenden Wasserrücklauf WR angeschlossen sind, wie in Figur 7 dargestellt.

Wie dort weiterhin gezeigt, sind an den beiden Werkzeughälften 2, 3 jeweils an den Einlauf- und Auslauflinien 20, 23 (vgl. Fig. 6) im Vor- und im Rücklauf des Kühlmittelstroms Temperatursensoren 29a, 29b bzw. 30a, 30b angeordnet, die über gestrichelt gezeichnete Leitungen mit einer Steuerung 31 verbunden sind. Außerdem ist an jedem Werkzeughälftenblock 2a, 3a ein Temperatursensor 32 bzw. 33 angeordnet, und im Kühlkreislauf 28b des Unterwerkzeugs 3 ist ein mit der Steuerung 31 verbundenes Motor-Drosselventil 34 vorgesehen.

Der Kühler 27 speist über den an den Kühlkreislauf 28a des Unterwerkzeugs 2 angeschlossenen Wasservorlauf WV mit einer konstant hohen Temperatur von 15 bis 22 °C, vorzugsweise 18 bis 20°C, einen ungeregelten und ungedrosselten Kühlmittelstrom ein, der von der Einlauflinie 20 in Folienlaufrichtung 5 die gesamte Formfläche bis zur Auslauflinie 23 durchströmt. Während der Durchströmung der Formfläche erhöht sich die Wassertemperatur. Diese Temperaturdifferenz wird von den im Wasservorlauf WV und im Wasserrücklauf WR angeordneten Temperatursensoren 29a und 29b als Δt erfasst und auf die Steuerung 31 übertragen. Die Steuerung 31 initiiert gemäß dem Δt des Unterwerkzeugs 2 eine Verstellung des in dem Kühlkreislauf 28b für das Oberwerkzeug 3 in dessen zum Kühler 27 zurück führenden Wasserrücklauf WR angeordneten Motor-Drosselventils 34 in der Weise, dass sich für das Oberwerkzeug 3 das gleiche Δt bzw. Temperaturprofil ergibt, was durch die an der Einlauf- und Auslauflinie im Wasservorlauf WV und im Wasserrücklauf WR des Oberwerkzeugs 3 angeordneten Temperatursensoren 30a, 30b erfasst wird. Ausgehend von dem Δt des Unterwerkzeugs 2 wird von der in der Steuerung 31 integrierten Regelung diese Temperatur erfasst und so gesteuert, dass das Δt der beiden Werkzeughälften bzw. von Unterwerkzeug 2 und Oberwerkzeug 3 gleich ist.

Wie in der Schemazeichnung der Figur 6 wieder gegeben ist, läßt sich durch die Temperaturführung mittels des im Unterwerkzeug 2 über die gesamte Formfläche erfassten und auf das Oberwerkzeug 3 übertragenen Δt ein nahezu gleiches Wachstum von Unter- und Oberwerkzeug 2, 3 erreichen, so dass ein maximaler Schneidenversatz 35 zwischen Stempel und Matrize auf einem kleinstmöglichen Wert gehalten werden kann.

Die an den Werkzeugblöcken 2a bzw. 3a von Unterwerkzeug 2 und Oberwerkzeug 3 vorgesehenen Temperatursensoren 32 bzw. 33 dienen der Betriebssicherheit der Thermoformmaschine und überwachen die gesamte Kühlkreis-Peripherie.

### Bezugszeichenliste

- 1: Thermoformmaschine
- 1a: Formstation
- 2: Unterwerkzeug / Werkzeughälfte
- 2a: Werkzeugblock
- 3: Oberwerkzeug / Werkzeughälfte
- 3a: Werkzeugblock
- 4: Form- und Stanzwerkzeug / Werkzeug
- 5: Folienlaufrichtung
- 6: Rolle
- 7: Kunststofffolienbahn / Folienbahn
- 8: Oberjoch
- 9: Kniehebel
- 10: Kurvenscheibe
- 11: Untertisch
- 12: Unterjoch
- 13: Schnittstempel
- 14: Matrize
- 15: Niederhalter
- 16: Vorstrecker
- 17: Kühlmittelkanal
- 18: Formnest
- 19: Formnestspalte
- 20: Einlauflinie
- 21: Verteilerleiste
- 22: Strömungspfeil / Spaltenströmung
- 23: Auslauflinie
- 24: Rücklaufleiste
- 25: Vorlauftemperaturregler
- 26: Förderpumpe
- 27: Kühler
- 28 a: Kühlkreislauf (Unterwerkzeug)
- 28 b: Kühlkreislauf (Oberwerkzeug)
- 29 a, b: Temperatursensor
- 30 a, b: Temperatursensor
- 31: Steuerung
- 32: Temperatursensor-Unterwerkzeugblock
- 33: Temperatursensor-Oberwerkzeugblock
- 34: Motor-Drosselventil
- 35: Schneidenversatz

- S: Werkzeugschließrichtung
- B: Formflächenbreite
- L: Formflächenlänge
- WV: Wasservorlauf
- WR: Wasserrücklauf

## Patentansprüche

1. Verfahren zum Kühlen eines aus formenden und stanzenden, aus zwei Werkzeughälften bestehenden, ein Oberwerkzeug (3) und ein Unterwerkzeug (2) aufweisenden Werkzeugs (4) einer Thermoformmaschine (1), wobei Oberwerkzeug (3) und Unterwerkzeug (2) von einem zentralen Kühler (27), der mit seinem Vorlauf (WV) und seinem Rücklauf (WR) an Kühlkreisläufe (28b, 28a) der beiden Werkzeughälften (2, 3) angeschlossen ist, mit einem Kühlmittel versorgt wird, wobei in den Kühlkreisläufen (28a, 28b) jeweils im Vorlauf (WV) und im Rücklauf (WR) ein Temperatursensor (29a, 29b; 30a, 30b) vorgesehen ist, die mit einer Steuerung (31) verbunden sind, die bei einer von den Sensoren (29a, 29b; 30a, 30b) erfassten Temperaturdifferenz ein Mittel zur Regelung des Kühlmittelstroms ansteuert,
**dadurch gekennzeichnet,**
**dass** die Temperaturdifferenz (Δt) einer Werkzeughälfte (3) abhängig von der Temperaturdifferenz (Δt) der anderen Werkzeughälfte (2) bis zum Vorliegen der selben Temperaturdifferenzen in beiden Werkzeughälften (2, 3) geregelt wird, wobei als Sollwert für die Differenzregelung das in Folienlaufrichtung (5) von den Temperatursensoren (29a, 29b) der einen Werkzeughälfte (2, 3) über die gesamte Werkzeug-Formfläche erfasste Δt zugrunde gelegt wird.

2. Verfahren nach Anspruch 1,
**dadurch gekennzeichnet,**
**dass** das Unterwerkzeug (2) von dem Kühler (27) mit einem ungeregelten, ungedrosselten, eine hohe Vorlauftemperatur, vorzugsweise 15 bis 22°C, aufweisenden Kühlmittelstrom versorgt wird, wobei das von den Temperatursensoren (29a, 29b) des Unterwerkzeugs (2) erfasste Δt in der Weise in Übereinstimmung mit dem dem Δt des Oberwerkzeugs (3) gebracht wird, dass die in der Steuerung (31) integrierte Regelung nur den dem Oberwerkzeug (3) zugeführten Kühlmittelstrom verändert, bis die Temperatursensoren (30a, 30b) des Oberwerkzeugs (3) das gleiche Δt wie im Unterwerkzeug (2) vorliegend erfassen.

3. Verfahren nach Anspruch 1 oder 2,
**dadurch gekennzeichnet,**
**dass** das Kühlmittel von dem Kühler (27) mit einer an die sich während des Betriebes im Werkzeug (4) einstellende Temperatur angepassten Vorlauftemperatur, vorzugsweise 18 bis 20 °C, zugeführt wird.

4. Vorrichtung zum Kühlen eines aus formenden und stanzenden, aus zwei Werkzeughälften bestehenden, ein Oberwerkzeug (3) und ein Unterwerkzeug (2) aufweisenden Werkzeugs (4) einer Thermoformmaschine (1), wobei Oberwerkzeug (3) und Unterwerkzeug (4) von einem zentralen Kühler (27), der mit seinem Vorlauf (WV) und seinem Rücklauf (WR) an Kühlkreisläufe (28a, 28b) der beiden Werkzeughälften (2, 3) angeschlossen ist, mit einem Kühlmittel versorgt wird, wobei in den Kühlkreisläufen (28a, 28b) jeweils im Vorlauf und im Rücklauf ein Temperatursensor (29a, 29b; 30a, 30b) vorgesehen ist, die mit einer Steuerung (31) verbunden sind, die bei einer von den Sensoren (29a, 29b; 30a, 30b) erfassten Temperaturdifferenz ein Mittel zur Regelung des Kühlmittelstroms ansteuert, insbesondere zum Durchführen des Verfahrens nach Anspruch 1,
**dadurch gekennzeichnet,**
**dass** der Kühler (27) mit einem Vorlauftemperaturregler (25) und einer Förderpumpe (26) ausgebildet ist, die dem Unterwerkzeug (2) einen eine hohe Vorlauftemperatur, vorzugsweise 15 bis 22 °C., aufweisenden, ungeregelten und ungedrosselten Kühlmittelstrom zuführt, dass von den beiden an den Kühler (27) angeschlossenen Kühlkreisläufen (28a, 28b) allein im Kühlkreislauf (28b) des Oberwerkzeugs (3) ein mit der Steuerung (31) verbundenes Mittel zum geregelten Verändern des dem Oberwerkzeug (2) zugeführten Kühlmittelstroms vorgesehen ist, und dass ein Temperatursensor (29a, 29b; 30a, 30b) in Folienlaufrichtung (5) gesehen jeweils an der Einlauf- sowie der Auslauflinie (20, 23) von Ober- und Unterwerkzeug (2, 3) angeordnet ist.

5. Vorrichtung nach Anspruch 4,
**dadurch gekennzeichnet,**
**dass** als Mittel zum Verändern des Kühlmittelstroms ein elektrisch stufenlos verstellbares Motor-Drosselventil (34) vorgesehen ist.

6. Vorrichtung nach Anspruch 4 oder 5,
**gekennzeichnet durch**
einen an jedem Werkzeugblock (2a, 3a) von Unterwerkzeug (2) und Oberwerkzeug (3) angeordneten, mit der Steuerung (31) verbundenen Temperatursensor (32, 33).

## Claims

1. A method for cooling a forming and stamping mould (4), consisting of two mould halves and having an upper mould (3) and a lower mould (2), of a thermoforming machine (1), the upper mould (3) and the lower mould (2) being supplied with a coolant by a central cooler (27), which is connected by its feed (WV) and its return (WR) to cooling circuits (28b, 28a) of the two mould halves (2, 3), there being a temperature sensor (29a, 29b; 30a, 30b) provided in the feed (WV) and in the return (WR) in each cooling circuit (28a, 28b) and connected to a controller (31) which actuates a means for adjusting the coolant flow when a temperature difference is detected by the sensors (29a, 29b; 30a, 30b),
**characterised in that**
the temperature difference (Δt) of one mould half (3) is adjusted depending on the temperature difference (Δt) of the other mould half (2) until the temperature differences are the same in both mould halves (2, 3), wherein the Δt detected over the whole mould forming face by the temperature sensors (29a, 29b) of one mould half (2, 3) in the film movement direction (5) is used as the target value for the difference adjustment.

2. The method according to Claim 1,
**characterised in that**
the lower mould (2) is supplied with an unadjusted, unthrottled coolant flow having a high feed temperature, preferably 15 to 22 °C, by the cooler (27), wherein the Δt detected by the temperature sensors (29a, 29b) of the lower mould (2) is brought into correspondence with the Δt of the upper mould (3) such that the adjustment system integrated in the controller (31) only changes the coolant flow supplied to the upper mould (3) until the temperature sensors (30a, 30b) of the upper mould (3) detect the same Δt as in the lower mould (2).

3. The method according to Claim 1 or 2,
**characterised in that**
the coolant is supplied by the cooler (27) at a feed temperature set to the temperature occurring in the mould (4) during operation, preferably 18 to 20 °C.

4. A device for cooling a forming and stamping mould (4), consisting of two mould halves and having an upper mould (3) and a lower mould (2), of a thermoforming machine (1), the upper mould (3) and the lower mould (4) being supplied with a coolant by a central cooler (27), which is connected by its feed (WV) and its return (WR) to cooling circuits (28a, 28b) of the two mould halves (2, 3), there being a temperature sensor (29a, 29b; 30a, 30b) provided in the feed and in the return in each cooling circuit (28a, 28b) and connected to a controller (31) which actuates a means for adjusting the coolant flow when a temperature difference is detected by the sensors (29a, 29b; 30a, 30b), in particular for carrying out the method according to Claim 1,
**characterised in that**
the cooler (27) is designed with a feed temperature adjuster (25) and a delivery pump (26) which supplies the lower mould (2) with an unadjusted and unthrottled coolant flow having a high feed temperature, preferably 15 to 22 °C, and, of the two cooling circuits (28a, 28b) connected to the cooler (27), only the cooling circuit (28b) of the upper mould (3) has a means, which is connected to the controller (31), for changing the coolant flow supplied to the upper mould (2) in an adjusted manner, and a temperature sensor (29a, 29b; 30a, 30b) is situated at each inlet line and outlet line (20, 23) of the upper and lower moulds (2, 3), as seen in the film movement direction (5).

5. The device according to Claim 4,
**characterised in that**
an electrically infinitely variable motor butterfly valve (34) is provided as the means for changing the coolant flow.

6. The device according to Claim 4 or 5,
**characterised by**
a temperature sensor (32, 33) connected to the controller (31) and arranged on each mould block (2a, 3a) of the lower mould (2) and the upper mould (3).

## Revendications

1. Procédé, destiné à refroidir un outil (4) de formage et d'estampage constitué de deux moitiés d'outil, comportant un outil supérieur (3) et un outil inférieur (2) d'une machine de thermoformage (1), l'outil supérieur (3) et l'outil inférieur (2) étant alimentés avec un agent réfrigérant par un refroidisseur (27) centralisé, qui par son conduit aller (WV) et son conduit retour (WR) est raccordé sur des circuits de refroidissement (28b, 28a) des deux moitiés d'outil (2, 3), dans les circuits de refroidissement (28a, 28b) étant prévu respectivement dans le conduit aller (WV) et dans le conduit retour (WR) un capteur de température (29a, 29b ; 30a, 30b) qui est connecté sur un système de commande (31) qui dans le cas d'une température différentielle détectée par les capteurs (29a, 29b ; 30a, 30b) amorce un moyen de régulation du flux d'agent réfrigérant,
**caractérisé en ce que**
la température différentielle (Δt) d'une moitié d'outil (3) est régulée en fonction de la température différentielle (Δt) de l'autre moitié d'outil (2) jusqu'à la présence des mêmes températures différentielles dans les deux moitiés d'outil (2, 3), en tant que valeur de consigne pour la régulation différentielle étant prise en tant que référence l'Δt détectée dans la direction de défilement du film (5) par les capteurs de température (29a, 29b) de l'une des moitiés d'outil (2, 3) sur l'ensemble de la surface de formage de l'outil.

2. Procédé selon la revendication 1,
**caractérisé en ce que**
l'outil inférieur (2) est alimenté par le refroidisseur (27) avec un flux d'agent réfrigérant non régulé, non étranglé, présentant une température aller élevée, de préférence de 15 à 22 °C, l'Δt détectée par les capteurs de température (29a, 29b) de l'outil inférieur (2) étant amenée en concordance avec l'Δt de l'outil supérieur (3), de telle sorte que la régulation intégrée dans le système de commande (31) ne modifie que le flux d'agent réfrigérant alimenté vers l'outil supérieur (3) jusqu'à ce que les capteurs de température (30a, 30b) de l'outil supérieur (3) détectent la même Δt que celle qui est présente dans l'outil inférieur (2).

3. Procédé selon la revendication 1 ou 2,
**caractérisé en ce que**
l'agent réfrigérant est alimenté par le refroidisseur (27) à une température aller adaptée à la température qui s'établit pendant le fonctionnement dans l'outil (4), de préférence de 18 à 20 °C.

4. Dispositif, destiné à refroidir un outil (4) de formage et d'estampage constitué de deux moitiés d'outil, comportant un outil supérieur (3) et un outil inférieur (2) d'une machine de thermoformage (1), l'outil supérieur (3) et l'outil inférieur (4) étant alimentés avec un agent réfrigérant par un refroidisseur (27) centralisé, qui par son conduit aller (WV) et son conduit retour (WR) est raccordé sur des circuits de refroidissement (28b, 28a) des deux moitiés d'outil (2, 3), dans les circuits de refroidissement (28a, 28b) étant prévu respectivement dans le conduit aller et dans le conduit retour un capteur de température (29a, 29b ; 30a, 30b) qui est connecté sur un système de commande (31) qui dans le cas d'une température différentielle détectée par les capteurs (29a, 29b ; 30a, 30b) amorce un moyen de régulation du flux d'agent réfrigérant, notamment pour la réalisation du procédé selon la revendication 1,
**caractérisé en ce que**
le refroidisseur (27) est conçu avec un régulateur de la température aller (25) et avec une pompe d'alimentation (26) qui alimente vers l'outil inférieur (2) un flux d'agent réfrigérant non régulé et non étranglé, présentant une température aller élevée, de préférence de 15 à 22 °C, **en ce que** parmi les deux circuits de refroidissement (28a, 28b) raccordés sur le refroidisseur (27), seul dans le circuit de refroidissement (28b) de l'outil supérieur (3) est prévu un moyen connecté sur le système de commande (31) pour la modification régulée du flux d'agent réfrigérant alimenté vers l'outil supérieur (2), et **en ce que** vu dans la direction de défilement du film (5), un capteur de température (29a, 29b ; 30a, 30b) est placé respectivement sur la ligne d'entrée et de sortie (20, 23) de l'outil supérieur et inférieur (2, 3).

5. Dispositif selon la revendication 4,
**caractérisé**
**en ce qu'**en tant que moyen destiné à modifier le flux d'agent réfrigérant est prévue une soupape d'étranglement à moteur (34) à réglage électrique continu.

6. Dispositif selon la revendication 4 ou 5,
**caractérisé par**
un capteur de température (32, 33) placé sur chaque bloc d'outil (2a, 3a) de l'outil inférieur (2) et de l'outil supérieur (3), connecté sur le système de commande (31).
